Europäisches Patentamt

European Patent Office

Office européen des brevets

(11) Veröffentlichungsnummer: **0 392 485**

**A1**

## (12) EUROPÄISCHE PATENTANMELDUNG

(21) Anmeldenummer: **90106910.4**

(22) Anmeldetag: **11.04.90**

(51) Int. Cl.5: **H01S 3/03, H01S 3/0975, H01S 3/036, H01S 3/07**

(30) Priorität: **14.04.89 DE 3912345**

(43) Veröffentlichungstag der Anmeldung:
**17.10.90 Patentblatt 90/42**

(84) Benannte Vertragsstaaten:
**DE FR GB IT**

(71) Anmelder: **Siemens Aktiengesellschaft**
**Wittelsbacherplatz 2**
**D-8000 München 2(DE)**

(72) Erfinder: **Seunik, Horst, Dr. Ing.**
**Unterhachinger Strasse 35**
**D-8000 München 83(DE)**
Erfinder: **Krüger, Hans. Dipl.-Phys.**
**Peralohstrasse 13**
**D-8000 München 83(DE)**
Erfinder: **Weber, Hubert, Dipl.-Phys.**
**Bahnhofstrasse 26**
**D-8900 Augsburg 1(DE)**

(54) **Gaslaser mit Mikrowellenanregung.**

(57) Ein Gasentladungsraum 2, in den über einen Hohlleiter 1 Mikrowellen eingespeist werden, bildet ein Lasergehäuse 5 in der Form eines Hohlleiters mit Längssteg 11, wobei das Lasergehäuse 5 vorzugsweise so dimensioniert ist, daß seine kritische Wellenlänge $\lambda_k$ kleiner oder gleich ist der Wellenlänge $\lambda_0$ der Mikrowellenfrequenz.

Die Erfindung ist für $CO_2$-Laser vorteilhaft anwendbar.

# FIG 1

EP 0 392 485 A1

## Gaslaser mit Mikrowellenanregung.

Die Erfindung betrifft einen Gaslaser nach dem Oberbegriff des Patentanspruchs 1. Ein derartiger Gaslaser ist aus der DE-OS 37 43 258 bekannt. Aus der DE-OS 37 29 053 ist ein Hochleistungs-Bandleiterlaser bekannt, der mit Hochfrequenz angeregt wird. Die Hochfrequenz wird dabei durch Elektroden, die an Isolierstoffbändern anliegen, in einem Spalt zwischen den Isolierstoffbändern eingekoppelt.

Der vorliegenden Erfindung liegt die Aufgabe zugrunde, den Aufwand für einen Laser nach Oberbegriff zu verringern und die erzielbare Leistung/Volumen zu erhöhen. Diese Aufgabe wird durch die Merkmale des Patentanspruchs 1 gelöst.

Wellenleiterlaser können mit einem hohen Gasdruck von beispielsweise 0, 1bar bis 1bar betrieben werden. Dabei ergeben sich sehr hohe Werte für die Leistungsdichte und für die aus einem gegebenen Volumen erzielbare Ausgangsleistung. Durch die erfindungsgemäße Einspeisung einer Mikrowelle gelingt die entsprecnend hohe Leistungszufuhr mit geringem Aufwand. Die für Mikrowellenherde üblichen Generatoren lassen sich einsetzen. Dadurch lassen sich die Kosten gering halten.

Das Zündelement, das in üblicher Weise aus einer Spitze oder Kante im Gasentladungsraum bestehen kann, ruft infolge der erfindungsgemäßen Anordnung keine Störung des Laserlichtes hervor. Es kann daher relativ groß und wirkungsvoll ausgeführt sein. So kann eine Zündung auch außerhalb des Maximums der elektrischen Feldstärke der Mikrowelle erfolgen. Die gezündete Plasmaentladung wandert dann in Richtung steigender Feldstärke in den Entladungsspalt hinein und zündet eine Laserentladung in der gesamten Fläche des Entladungsspaltes.

Bei hohen Gasdruckwerten, bei denen keine gleichmäßige Laserentladung über die gesamte Fläche des Entladungsspaltes erhalten wird, empfiehlt sich eine gepulste Mikrowelleneinspeisung. Dabei wandert die Plasmaentladung vom Zündelement in Richtung Mikrowellenfenster der Einspeiseinheit. Die Mikrowellenimpulse werden vorteilhaft in Breite und Abstand so dimensioniert, daß die Laserentladung vom Zündelement ausgehend gerade noch den Entladungsspalt durchläuft und die Pausen einen gerade ausreichenden Abbau der Plasmaentladung gewährleisten, so daß eine Neuzündung an den Zündelementen möglich ist. Da die Laserentladung bis zum Verbrauch des erzeugten Plasmas über den Mikrowellenimpuls hinaus andauert, entsteht so ein nahezu kontinuierlicher Laserstrahl.

Vorteilhaft wird der Wellenleiterlaser mit einem instabilen Resonator der in der DE-OS 37 29 053 beschriebenen Art ausgerüstet. Dadurch wird bei hoher Strahlintensität eine relativ einfache Energieauskopplung und eine einfache Ausnutzung der vollen Breite des Entladungsspaltes erreicht. Die Erfindung eignet sich insbesondere für nicht oder nur langsam geströmte Laser (slow flow laser). Der Gasentladungsraum ist vorteilhafterweise abgeschlossen, eine Umwälzpumpe für Lasergas braucht nicht vorgesehen zu sein. Die Dimensionierung des Gasentladungsraumes ist vorteilhaft so gestaltet, daß die kritische Wellenlänge $\lambda_k$ des Gasentladungsraumes kleiner oder gleich der der Mikrowellenfrequenz entsprechenden Wellenlänge $\lambda_o$ im freien Raum ist. Hierdurch ergibt sich eine aperiodisch gedämpfte Wellenausbreitung. Die Mikrowellen-Einspeiseeinheit ist vorteilhaft senkrecht zum Lasergehäuse angeordnet, wobei insbesondere bei Impulsbetrieb das Zündelement in Verlängerung der Mikrowellen-Einspeiseeinheit hinter dem Entladungsspalt angeordnet ist. Als Zündelement dienen vorteilhaft eine oder mehrere Zündspitzen, die in den Entladungsraum hineinragen. Zumindest ein Zundelement ist vorteilnaft in einem Bereich hoher elektrischer Feldstärke der Mikrowelle angeordnet.

Vorteilhaft ist der Entladungsspalt aus elektrisch leitenden Stegen gebildet, welche auf der einander zugewandten Seite eine profilierte Oberfläche besitzen, deren Profil einen über den Entladungsspalt annähernd konstanten Wert des Quotienten der Feldstärke pro Neutralteilchendichte gewährleistet. Dazu werden die Stege im Bereich der Mikrowelleneinspeisung am weitesten voneinander entfernt liegend ausgebildet. Das Profil der Stege wird vorteilhaft durch elektrisch nichtleitende Einsätze mit einem komplementären Profil so ergänzt, daß der Entladungsspalt einen konstanten Wandabstand besitzt. Für optimale Wellenleitereigenschaften sind die Einsätze auf den einander zugewandten Seiten mit geglätteten Oberflächen mit sehr geringer Restrauhigkeit ausgestattet. Als Material für die Einsätze eignet sich Keramik, insbesondere $Al_2O_3$-Keramik.

Die Mikrowelleneinspeiseeinheit ist vorteilhaft im Bereich des Überganges zum Lasergehäuse zumindest in Richtung der Strahlausbreitung verbreitert. Dadurch entsteht eine bessere Impedanzanpassung.

Die Erfindung eignet sich insbesondere für CO- oder $CO_2$-Laser. Die Mikrowellenfrequenz liegt vorteilhaft im Frequenzbereich zwischen 0,5GHz und 10GHz. Dabei können durch einen instabilen Resonator hohe Strahldichten erreicht werden, da hier dickwandige Kupferspiegel, die gut kühlbar sind, eingesetzt erden können. Bei geringerem Leistungsbedarf ohne unzulässige Erwärmung der Spiegel kann auch ein stabiler Resonator zum Einsatz kommen.

In Fällen, in denen eine gewisse Inhomogenität der Feldverteilung im Entladungsspalt nicht stört, kann es vorteilhaft sein, die Wellenlänge $\lambda_o$ kleiner als die kritische Wellenlänge $\lambda_k$ zu wählen.

Die Erfindung wird nun anhand von vier Figuren näher erläutert.

FIG 1 zeigt einen erfindungsgemäßen Gaslaser im Schrägbild,

FIG 2 zeigt eine weitere Ausführungsform im Schrägbild in teilweise geschnittener und gebrohnener Ansicht.

FIG 3, 4 zeigen ein weiteres Beispiel eines erfindungsgemäßen Gaslasers in zwei geschnittenen Ansichten schematisch.

Ein Hohlleiter 1 ist über ein Mikrowellenfenster 4 von einem Gasentladungsraum 2 abgetrennt. Der Hohlleiter 1 trägt einen Mikrowellengenerator 3, der vorzugsweise in einer handelsüblichen Ausführung besteht, wie sie beispielsweise für Mikrowellenherde im Handel erhältlich ist. Schrauben 9 und Blenden 10 dienen zur Reduzierung von reflektierten Mikrowellen.

Im Entladungsspalt 7 bildet sich infolge seiner im Vergleich zur Weite w des Hohlleiters kleinen Spaltbreite d eine hohe elektrische Feldstärke aus. Der Entladungsspalt 7 besitzt vorteilhaft eine Spaltbreite d von 1,5mm bei einer Weite des Hohlleiters von etwa 5mm. Dabei brennt bei einem Gasdruck von 200mbar in einem $CO_2$-Laser eine gleichmäßige Plasmaentladung über den ganzen Entladungsspalt. Wird durch die Zündelemente 6 bzw. 8 eine Plasmaentladung gezündet, so wandert diese schnell in den Bereich hoher Feldstärke und konzentriert sich daher im Entladungsspalt 7. Dies gilt sowohl, wenn die Zündelemente 6 in der Nähe des Mikrowellenfensters 4 angeordnet sind, als auch wenn sie an geeigneter anderer Stelle im Entladungsraum positioniert sind, wie beispielsweise die Zündelemente 8. Die Zündelemente sind vorzugsweise als elektrisch leitfähige Spitzen ausgebildet. Bei ausreichender Feldüberhöhung im Entladungsspalt 7 sind die Zündelemente 6 im Bereich des Mikrowellenfensters 4 besonders günstig angeordnet, da dort eine besonders hohe elektrische Feldstärke der Mikrowellen zu finden ist. Soll dagegen der Laser im Pulsbetrieb eingesetzt werden, was sich bei hohen Gasdruckwerten emp fiehlt, dann sind Zündelemente 33 vorzuziehen, die sich außerhalb der Laserentladung, aber von der Einspeiseeinheit entfernt befinden. In diesem Fall füllt die Plasmaentladung nicht den gesamten Entladungsspalt aus, sondern wandert von den Zündelementen ausgehend in Richtung steigender Feldstärke. So wandert sie während der Mikrowellenpulsdauer in Richtung Mikrowellenquelle. Die Laseranregung

dauert dabei über die Mikrowelleneinspeisung hinaus an, da die im Plasma gespeicherte Energie noch verbraucht werden kann. Bei entsprechender Anpassung von Pulsdauer und Pulspause ergibt sich ein praktisch kontinuierlicher Laserstrahl auch bei der Ansteuerung mittels Mikrowellenpulsen.

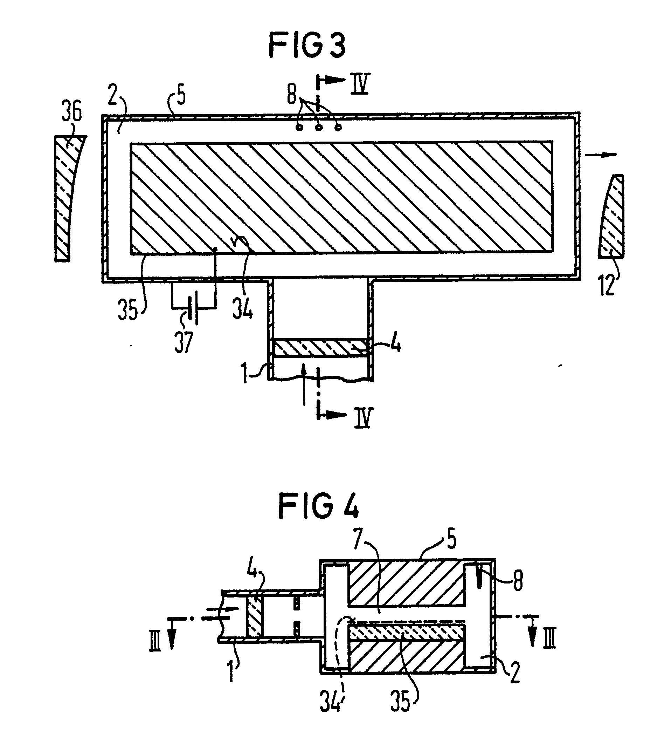

Der Gasentladungsraum ist vorteilhaft zumindest teilweise mit einem Katalysator beschichtet. Insbesondere auf den Begrenzungen des Entladungsspaltes 7 wirken die in FIG 3 schraffiert und in FIG 4 gestrichelt dargestellten Katalysatorschichten einer Zersetzung des $CO_2$ in $CO$ und $O_2$ entgegen das Gleichgewicht dieser Reaktion wird zu mehr $CO_2$ verschoben. Als Katalysator eignen sich Schichten aus Metallen wie Gold, Platin, Palladium oder mit diesen Metallen dotierte Oxidschichten, z.B. eine dotierte $SnO_2$-Schicht.

Diese Schichten können im Tauchverfahren, durch Aufsputtern oder Aufdampfen oder im CVD-Verfahren aufgebracht sein. Gut geeignete Schichten sind auch Cu/Au-Wandbeschichtungen, die im Plasma oxidiert wurden.

Insbesondere in abgeschlossenen Lasern sind die Wände des Gasentladungsraumes passiviert, so daß kein Sauerstoff ($O_x$, x = 1 - 3) aus der Gasentladung verbraucht wird; hierzu eignen sich z.B. oxidiertes, vorzugsweise eloxiertes Aluminium oder oxidiertes Nickel. Diese Schichten können mit den genannten Katalysatoren dotiert sein.

Eine Verbesserung der Katalysator-Wirkung und eine Homogenisierung der Gasentladung wird erreicht, indem die Begrenzungsflächen des Entladungsspaltes elektrisch leitfähig und gegeneinander isoliert ausgebildet sind und indem zwischen den Begrenzungsflächen eine elektrische Gleichspannung, z.B. durch eine Gleichstromquelle 37 erzeugt wird. Hierzu kann ein galvanisch nichtleitender Einsatz 35 (FIG 3, 4), z.B. aus $Al_2O_3$-Keramik mit einer elektrisch leitenden Beschichtung 34 versehen sein (in FIG 4 gestrichelt dargestellt). Ein zusätzlich angelegtes Magnetfeld ergibt den Vorteil einer weiteren Homogenisierung der Entladung. Die Resonatorspiegel 12, 36 bilden einen instabilen Resonator, der Strahl tritt auf der von der Mikrowellen-Einspeiseeinheit 1 abgewandten Seite des Lasergehäuses 2 aus.

Der Gasentladungsraum 2 ist so dimensioniert, daß seine kritische Wellenlänge $\lambda_k$ gleich oder kleiner ist als die Wellenlänge $\lambda_o$ der Anregungsfrequenz der vorgesehenen Mikrowelle. So ergibt sich eine aperiodische Ausbreitung der Mikrowelle, also ein exponentieller Abfall des elektrischen Feldes mit wachsender Entfernung von der Einspeiseeinheit 1. Die Plasmaentladung bewirkt hierbei eine Bedämpfung und ermöglicht eine nahezu reflektionsfreie Einkopplung der Mikrowelle. Dadurch kann der ganze Entladungsraum angeregt werden und zur Laserentladung beitragen. Eine weitgehend homogene Energieverteilung ergibt sich dabei, wenn die Wellenlänge$\lambda_o$ nahe an die kritische Wellenlänge$\lambda_k$ angenähert wird.

An den Stirnseiten des Lasergehäuses 5 befinden sich Resonatorsspiegel 12 und ein Strahlaustrittsfenster 13. Die Resonatorspiegel 12 bilden im gezeigten Beispiel einen instabilen Resonator für die Laserstrahlung. Diese Ausführungsform hat den Vorteil, daß die Resonatorspiegel massive, gut kühlbare Metallspiegel sein können, vorzugsweise Kupferspiegel. Sie können daher hoch belastet werden, der Laserleistung sind von den Spiegeln her keine Grenzen gesetzt. Auch ein stabiler Resonator kann eingesetzt werden. In diesem Fall muß einer der Resonatorspiegel in an sich bekannter Weise teildurchlässig gestaltet werden, er kann also nur eine geringe Dicke der Metallschicht aufweisen, die Kühlmöglichkeiten sind begrenzt.

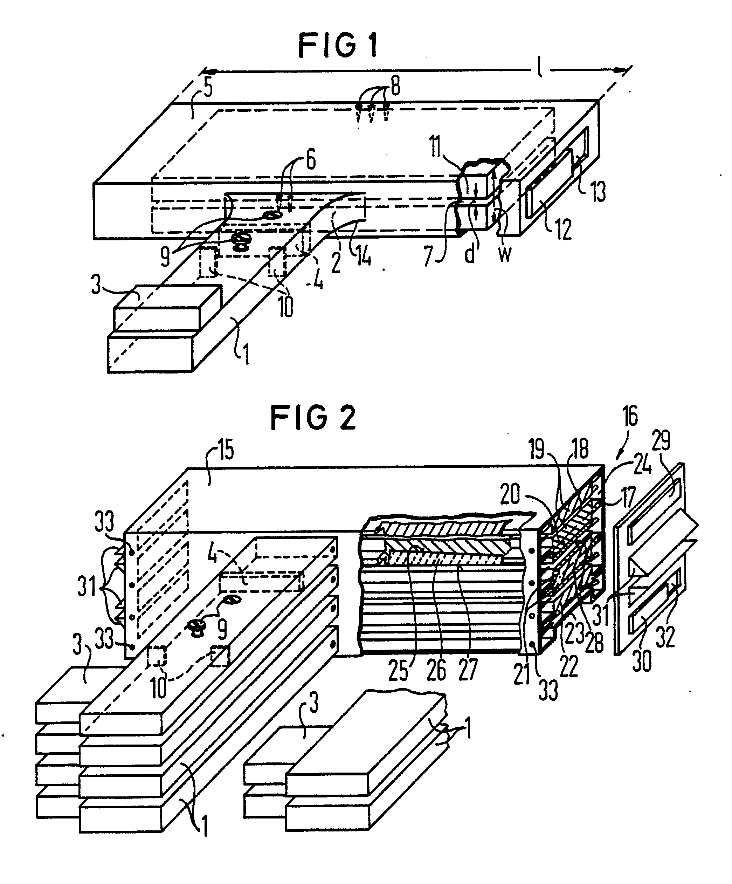

Die Einspeiseeinheit 1 besitzt angrenzend an das Lasergehäuse 5 einen Übergangsbereich 14, der in der Richtung der größten Ausdehnung des Lasergehäuses 5 erweitert ist. Dadurch ergibt sich eine verbesserte Anpassung an das Lasergehäuse. Im Beispiel der FIG 2 sind in einem Lasergehäuse 15 hier Laserhohlleiter 16 gebildet, die zu einer einheitlichen Struktur verbunden sind und deren Abgrenzung durch gestrichelte Linien 17 gekennzeichnet ist. Diese Laserhohlleiter 16 enthalten jeweils einen Entladungsspalt 18, welcher durch Stege 19 bis 23 gebildet ist. Die Entladungsspalte 18 sind durch Hohlräume 24 begrenzt, die das Gebilde zu einem Hohlleiter mit Längssteg ergänzen. Der Entladungsraum 18 kann durch symmetrisch ausgebildete Stege 19 in der Mitte des Hohlleiters, durch unsymmetrische Stege 21, 22 oder nur einen Steg 23 und eine Begrenzung des Hohlleiters gebildet sein. Die Stege 20 und 21 besitzen ein Profil 25, in das Einsätze 26, 28 mit einem komplementären Profil eingefügt sind. Die Einsätze 26, 28 bestehen aus elektrisch nicht leitendem Material und besitzen je eine Oberfläche 27, die den Entladungskanal 18 begrenzt und eine hohe, für die Wellenleitung des Laserlichtes ausreichende Oberflächengüte besitzt. Durch diese Ausführungsform wird im ganzen Entladungsspalt ein optimales Verhältnis der elektrischen Feldstärke E zur Neutralteilchendichte N gewährleistet. Die Einsätze 28 in den Stegen 21 besitzen ein Profil, welches auch einen Abfall der Feldstärke quer zur Strahlrichtung der Laserstrahlung kompensiert.

Die Laserstrahlung der Laserhohlleiter 16 wird an Spiegeln 29 und 30 reflektiert, wobei diese Spiegel einen instabilen Resonator bilden. Im Strahlengang zwischen diesen Spiegeln wird der Laserstrahl von einem Laserhohlleiter 16 zum nächsten mittels Prismen 31 oder entsprechenden Spiegeln umgelenkt und dem jeweils benachbarten Entladungsspalt 18 zugeführt. So entsteht ein mäanderförmiger Laserstrahl zwischen den Laserspiegeln 29 und 30. Über ein Austrittsfenster 32 wird der Laserstrahl heraus und einer Anwendung zugeführt.

Diese Ausführungsform ermöglicht einen hohen Wirkungsgrad der Laserleistung und sehr hohe absolute Laserleistungen. Dementsprechend werden hohe Mikrowellenleistungen benötigt. Um hierfür handelsübliche Mikrowellengeneratoren einsetzen zu können, werden die Mikrowellengeneratoren 3 jeweils an eine entsprechende Einspeiseeinheit 1 angeschlossen, wobei mehrere Einspeiseeinheiten 1 an ein Lasergehäuse 15 angeschlossen sind. Die Einspeiseeinheiten 1 sind im vorliegenden Beispiel matrixförmig angeordnet, wobei jeweils zwei Einspeiseeinheiten 1 jeweils einen Laserhohlleiter 16 speisen. So läßt sich mit handelsüblichen Teilen eine beliebig hohe und stufig einstellbare Energie in einem erfindugnsgemäßen Gaslaser einspeisen. Die Einspeiseeinheiten werden dabei phasengekoppelt betrieben.

Das Lasergehäuse eines erfindungsgemäßen Gaslasers kann aus Metall hergestellt sein. Vakuumdichte Metall-Keramik- oder Metall-Glas-Übergänge sind nicht erforderlich. Dadurch ergibt sich ein kostengünstiger Aufbau.

## Ansprüche

1. Gaslaser mit Mikrowellenanregung, bei dem ein Lasergehäuse und zumindest ein zur Einspeisung der Mikrowelle dienender Hohlleiter einen Gasentladungsraum bilden, in dem sich ein elektrisches Feld zu der gewählten Frequenz ausbilden kann, bei dem der Gasentladungsraum zu einem Mikrowellengenerator hin über ein Mikrowellenfenster abgeschlossen ist, bei dem das Mikrowellenfenster in der Einspeiseeinheit außerhalb des Lasergehäuses oder in dessen Wand liegt, bei dem zumindest ein Zündelement zur Zündung einer Plasmaentladung im Gasentladungsraum angeordnet ist, **dadurch gekennzeichnet,** daß das Lasergehäuse zumindest einen Laser-Hohlleiter mit Längssteg bildet, wobei der Längssteg einen Entladungsspalt für eine Laserentladung definiert, und daß das Zündelement außerhalb des Entladungsspaltes liegt.

2. Gaslaser nach Anspruch 1, **dadurch gekennzeichnet,** daß er einen instabilen Resonator beinhaltet.

3. Gaslaser nach Anspruch 1, **dadurch gekennzeichnet,** daß der Gasentladungsraum abgeschlossen und der Laser nicht geströmt ist, bzw. eine langsame Strömung aufweist ("slow flow").

4. Gaslaser nach Anspruch 1, **dadurch gekennzeichnet,** daß die Dimensionierung des Gasentladungsraumes eine Feldstärke im Entladungsspalt gewährleistet, die größer ist als die Feldstärke im Gasentladungsraum außerhalb des Entladungsspaltes und daß die der Mikrowellenfrequenz entsprechende Wellenlänge $\lambda_o$ großer oder gleich der kritischen Wellenlänge $\lambda_k$ des Entladungsraumes ist, so daß im Entladungsspalt eine aperiodische Wellenausbreitung stattfindet.

5. Gaslaser nach Anspruch 1, **dadurch gekennzeichnet**, daß zumindest ein Zündelement in einem Bereich hoher elektrischer Feldstärke der Mikrowelle angeordnet ist.

6. Gaslaser nach Anspruch 5, **dadurch gekennzeichnet**, daß die Mikrowellen-Einspeiseeinheit senkrecht zum Lasergehäuse angeordnet ist und das das Zü2223ndelement in Verlängerung der Mikrowelleneinspeiseeinheit hinter dem Entladungsspalt angeordnet ist.

7. Gaslaser nach Anspruch 5, **dadurch gekennzeichnet**, daß das Zündelement im Bereich der Mikrowellen-Einspeisung angeordnet ist.

8. Gaslaser nach Anspruch 1, **dadurch gekennzeichnet**, daß als Zündelement eine oder mehrere Zündspitzen dienen, die in den Gasentladungsraum hineinragen.

9. Gaslaser nach Anspruch 1, **dadurch gekennzeichnet**, daß die Innenwand des Laserhohlleiters zumindest teilweise mit einem Katalysatormaterial beschichtet ist, welches einerseits eine Zersetzung von $CO_2$ in CO und O2 verhindert oder zumindest teilweise rückgängig macht und andererseits Sauerstoff, insbesondere naszierenden Sauerstoff nicht bindet.

10. Gaslaser nach Anspruch 9, **dadurch gekennzeichnet**, daß die Innenwand mit einem der Stoffe Gold, Platin, Palladium beschichtet ist.

11. Gaslaser nach Anspruch 1, **dadurch gekennzeichnet**, daß die Oberfläche der Innenwand durch eloxiertes Aluminium oder durch ein mit Nikkeloxid überzogenes Nickel gebildet ist.

12. Gasla12ser nach Anspruch 9, **dadurch gekennzeichnet**, daß die Oberfläche der Innenwand durch Oxide überzogen ist, die mit einem oder mehreren der Stoffe Au, Pt, Pd dotiert sind.

13. Gaslaser nach Anspruch 12, **dadurch gekennzeichnet**, daß dotiertes $SnO_2$ durch Tauchen, Bedampfen oder Sputtern aufgebracht ist.

14. Gaslaser nach Anspruch 1, **dadurch gekennzeichnet**, daß der Laserhohlleiter aus elektrisch leitenden Stegen gebildet ist, welche auf der einander zugewandten Seite eine profilierte Oberfläche sitzen, deren Profil einen über den Bandleiter annähernd konstanten Wert des Quotienten der Feldstärke zur Dichte der Neutralteilchen (E/N) gewährleistet.

15. Gaslaser nach Anspruch 14, **dadurch gekennzeichnet**, daß die Stege im Bereich der Mikrowelleneinspeisung am weitesten voneinander entfernt sind.

16. Gaslaser nach Anspruch 14, **dadurch gekennzeichnet**, daß das Profil der Stege durch elektrisch nicht leitende Einsätze mit einem komplementären Profil so ergänzt wird, daß für die Entladung ein Spalt von konstantem Wandabstand übrigbleibt.

17. Gaslaser nach Anspruch 16, **dadurch gekennzeichnet**, daß die Einsätze aus Keramik, vorzugsweise aus $Al_2O_3$-Keramik bestehen.

18. Gaslaser nach Anspruch 16, **dadurch gekennzeichnet**, daß die Einsätze auf den einander zugewandten Seiten geglättete Oberflächen mit sehr geringer Restrauhigkeit besitzen.

19. Gaslaser nach Anspruch 1, **dadurch gekennzeichnet**, daß die Mikrowellen-Einspeiseeinheit im Bereich des Überganges zum Lasergehäuse zumindest in Richtung der Strahlausbreitung verbreitert ist.

20. Gaslaser nach Anspruch 1, **dadurch gekennzeichnet**, daß zwei oder mehr Einspeiseeinheiten vorgesehen sind.

21. Gaslaser nach Anspruch 20, **dadurch gekennzeichnet**, daß die Einspeiseeinheiten in Richtung der Laserentladung nebeneinander angeordnet sind und in dasselbe Lasergehäuse einspeisen.

22. Gaslaser nach einem der Ansprüche 20 oder 21, **dadurch gekennzeichnet**, daß zwei oder mehr Hohlleiter mit Längsstegen übereinander angeordnet sind, daß jeder Hohlleiter von zumindest einer Einspeiseeinheit gespeist wird und daß die Laserstrahlung über Umlenkprismen oder Umlenkspiegel jeweils von einem Hohlleiter zum nächsten geleitet wird, während nur in Verlängerung der im so gebildeten Stapel außenliegenden Hohlleiter Resonatorspiegel und gegebenenfalls ein Austrittsfenster für die Laserstrahlung angeordnet sind.

23. Gaslaser nach Anspruch 1, **dadurch gekennzeichnet**, daß die Frequenz der Mikrowelle im Bereich zwischen 0,5GHz und 10GHz liegt.

24. Gaslaser nach Anspruch 1, **dadurch gekennzeichnet**, daß die Dimensionierung des Gasentladungsraumes eine Feldstärke im Entladungsspalt gewährleistet, die größer ist als die Feldstärke im Gasentladungsraum außerhalb des Entladungsspaltes und daß die der Mikrowelle entsprechende Wellenlänge $\lambda_o$ kleiner ist als die kritische Wellenlänge $\lambda_k$ des Entladungsraumes.

# FIG 1

# FIG 2

FIG 3

FIG 4

Europäisches Patentamt

**EUROPÄISCHER RECHERCHENBERICHT**

Nummer der Anmeldung

EP 90 10 6910

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 284 719 (MESSER GRIESHEIM) <br> * Zusammenfassung; Spalte 8, Zeile 56 - Spalte 9, Zeile 11; Figuren 1-9 * <br> --- | 1,5-8, 15,19, 20,23 | H 01 S 3/03 <br> H 01 S 3/0975 <br> H 01 S 3/036 <br> H 01 S 3/07 |
| A | EP-A-0 275 023 (J. TULIP) <br> * Ansprüche 1-14; Figuren 1-3 * <br> --- | 1-4,15- 21,23, 24 | |
| D,A | EP-A-0 305 893 (DEUTSCHE FORSCHUNGS- UND VERSUCHSANSTALT FÜR LUFT- UND RAUMFAHRT) <br> * Figur 6 * <br> --- | 22 | |
| A | US-A-4 756 000 (J.A. MACKEN) <br> * Zusammenfassung * <br> ----- | 9-13 | |
| | | | **RECHERCHIERTE SACHGEBIETE (Int. Cl.5)** <br><br> H 01 S |

Der vorliegende Recherchenbericht wurde für alle Patentansprüche erstellt

| Recherchenort | Abschlußdatum der Recherche | Prüfer |
|---|---|---|
| DEN HAAG | 11-06-1990 | MALIC K. |